# EUROPEAN PATENT APPLICATION

(11) **EP 3 690 770 A1**
(43) Date of publication of application: **05.08.2020**
(21) Application number: 17927501.1
(22) Date of filing: 27.09.2017
(51) Int. Cl.: G06Q 10/06

(54) **PERSONNEL ALLOCATION PLANNING DEVICE, PERSONNEL ALLOCATION PLANNING METHOD, AND PERSONNEL ALLOCATION PLANNING PROGRAM**

(71) Applicant: Fujitsu Limited, Kawasaki-shi, Kanagawa 211-8588 (JP)
(72) Inventor: YAMAZAKI, Takashi, Kawasaki-shi, Kanagawa 211-8588 (JP)
(74) Representative: Haseltine Lake Kempner LLP
(86) International application number: PCT/JP2017/034983
(87) International publication number: WO 2019/064379

(57) **Abstract**

An input reception unit 40 receives a simulation condition, and a simulation execution unit 42 executes a multi-objective optimization using a line simulator based on the simulation condition. Thereby, a plurality of staffing plans for optimizing at least one of the optimization indexes (optimization items) including a number of workers and a number of processing orders are obtained. In this case, the simulation execution unit 42 divides a work time of a day into a plurality of times, and executes a multi-objective optimization for each division unit. For this reason, it is possible to reduce a processing load when formulating a plurality of appropriate arrangement plans of workers for each process performed in a distribution center.

## Description

### FIELD

The embodiments discussed herein are related to a personnel allocation formulation device, a personnel allocation formulation method, and a personnel allocation formulation program.

### BACKGROUND

In recent years, with the spread of Internet shopping and the like, the amount of goods delivery has increased dramatically. With such trend, labor shortages are becoming serious not only in the delivery phase using trucks or the like but also in the inside of the distribution centers. Furthermore, while the distribution center is supposed to perform respective phases of picking up, inspecting, and packing ordered articles, each work is becoming more complicated as articles are diversified and customer needs are diversified.

Conventionally, for example, a technology disclosed in Patent Document 1 and the like is known as a technology for creating a work plan for a distribution center.

Patent Document 1: Japanese Laid-open Patent Publication No. 10-97657.

### SUMMARY

### [TECHNICAL PROBLEM]

In order to achieve an improvement in work efficiency in the distribution center, a technology relating to navigating a worker to the moving destination by Internet of Things (IoT) has also been studied. However, since the work in the distribution center is largely dependent on the skill of the worker, and besides the movement speed and work speed of the worker are exceptionally high, it is difficult to navigate the worker to the appropriate moving destination in real time.

In one aspect, an object of an embodiment is to provide a personnel allocation formulation device, a personnel allocation formulation method, and a personnel allocation formulation program capable of formulating a plurality of allocation plans for workers for each phase carried out in a distribution center without applying a processing load.

### [SOLUTION TO PROBLEM]

A personnel allocation formulation device according to one mode is a personnel allocation formulation device that formulates an allocation plan for workers for each phase in a distribution center in which a phase of picking up products to be delivered based on orders, a phase of inspecting the picked-up products, and a phase of packing the inspected products are executed by workers is provided, the personnel allocation formulation device including: a reception unit that receives a simulation condition; and a calculation unit that executes multi-objective optimization using a line simulator based on the simulation condition to find a plurality of allocation plans for worker that optimize at least one of optimization items including a number of the workers and a number of the orders that are processable, in which the calculation unit divides a work time for one day or orders to be processed in one day at the distribution center into a plurality of parts and executes the multi-objective optimization in units of respective divided parts.

### [ADVANTAGEOUS EFFECTS OF INVENTION]

A plurality of allocation plans for workers for each phase carried out in the distribution center may be formulated without applying a processing load.

### BRIEF DESCRIPTION OF DRAWINGS

FIG. 1 is a diagram schematically illustrating a line in a distribution center according to an embodiment;
FIG. 2 is a diagram illustrating a hardware configuration of a personnel allocation formulation device;
FIG. 3 is a functional block diagram of the personnel allocation formulation device;
FIG. 4 is a flowchart illustrating an example of processing of the personnel allocation formulation device;
FIG. 5 is a diagram (part 1) illustrating a result of constructing a personnel allocation plan;
FIG. 6 is a diagram (part 2) illustrating a result of constructing a personnel allocation plan;
FIG. 7 is a graph illustrating a change in the number of processing containers at a certain work position for each time zone in a case where a plan of personnel allocation is constructed, as compared to before optimization;
FIG. 8 is a diagram illustrating a display example (part 1) by a display processing unit;
FIGs. 9A and 9B are diagrams illustrating display examples (part 2) by the display processing unit; and
FIGs. 10A and 10B are diagrams for explaining a case where an administrator or the like alters a plan of personnel allocation.

### DESCRIPTION OF EMBODIMENTS

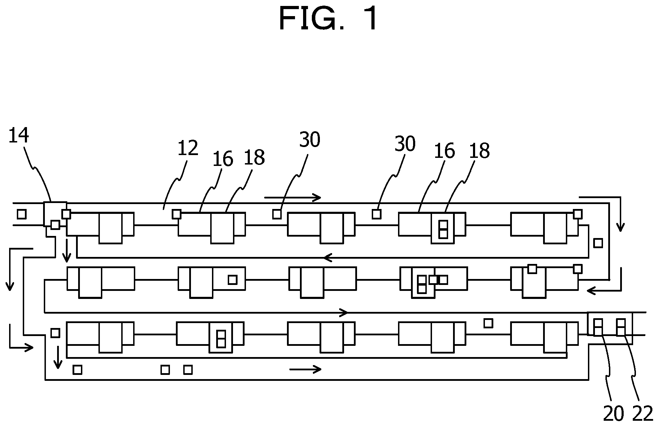

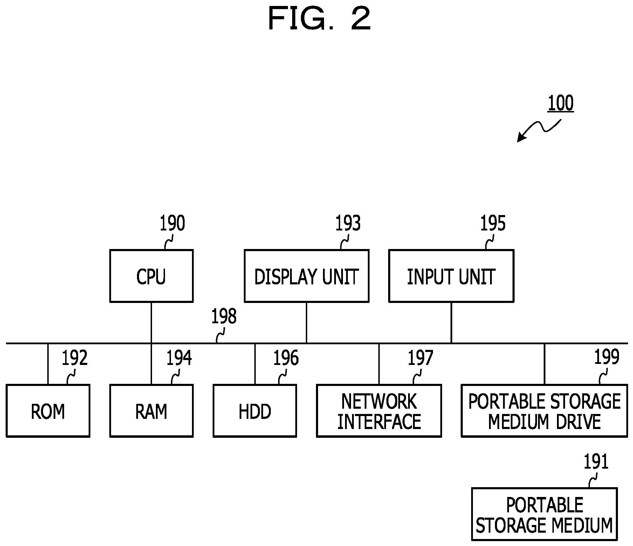

Hereinafter, one embodiment of a personnel allocation formulation device will be described in detail with reference to FIGs. 1 to 10B. The personnel allocation formulation device 100 (see FIG. 2) of the present embodiment is a device that formulates a plan of personnel allocation for a line in a distribution center that prepares for product delivery (product pickup, inspection, and packing).

FIG. 1 is a diagram illustrating an example of a line in a distribution center. As illustrated in FIG. 1, a mainstream line 12 is provided in the distribution center to flow containers 30 for workers to fill with products according to orders. In a most upstream area of the mainstream line 12 (upper left in FIG. 1), there is a place (slip insertion place) 14 where a slip on which an order is written is inserted into the container 30. Furthermore, there are substream lines 16 and pickup sites 18 at a plurality of locations (15 locations in FIG. 1) of the mainstream line 12. Note that, it is assumed that there is a shelf for storing products in the vicinity of the pickup site 18.

When the container 30 flows through the mainstream line 12 and reaches the vicinity of a shelf that stores a product with which the container 30 is to be filled, the container 30 is caused to flow into the substream line 16 by a robot arm (not illustrated) or the like and reach the pickup site 18.

Once a product pickup phase (work of filling the container 30 with a product) is performed by a worker at the pickup site 18, the container 30 is returned to the mainstream line 12. Then, after the container 30 is filled with all the products included in the order, the container 30 is sent to an inspection station 20. Once a worker in charge executes product inspection (inspection phase) at the inspection station 20, the container 30 is sent to a packing station 22. Then, at the packing station 22, a worker in charge executes a work of filling a delivery box with the products in the container 30 and packing the delivery box (packing phase).

Note that, in the example in FIG. 1, the container 30 that is not supposed to be filled with products at the pickup sites 18 present in the first and second rows on the upper side of the drawing is caused to pass through the slip insertion place 14 and thereafter to be sent directly to the third row without going through the first and second rows. Furthermore, the container 30 that is not supposed to be filled with products at the pickup sites 18 in the third row is caused to be sent directly to the inspection station 20 without traveling through the third row of the mainstream line 12.

In the personnel allocation formulation device 100 of the present embodiment, each phase of the distribution center as described above is virtualized by a line simulator. The line simulator is a solver that uses an algorithm based on traffic congestion studies that have been used in the manufacturing site in the past. When optimization is performed using the line simulator, it is desired to enhance the accuracy such that the on-site situation can be virtually reproduced. For that purpose, information regarding the movement and judgment of the worker is important, and thus the worker rule is standardized by, for example, interviewing the worker. Note that, at the manufacturing site, it has been possible to formulate a product insertion plan in the production line by a real-time navigation system using the line simulator; in contrast, at the distribution center, since the movement speed and work speed of the worker are exceptionally high, and the worker is expected to make a quick judgment, it is difficult to navigate the worker in real time. Furthermore, when a plan of personnel allocation is to be found, if the entire work time for one day (all orders for one day) is targeted, the number of combinations to be searched will be too large, and it is thus difficult to find an optimal personnel allocation for all time zones. Therefore, in the present embodiment, one day is divided into several spans of a predetermined time (for example, 30 minutes) during which the worker is allowed to move, and the line simulator is used for each divided span of the above time to sequentially formulate a plan of how many workers are optimally allocated to each of the above-described pickup phase, inspection phase, and packing phase. In addition, when an optimal personnel allocation is to be found, a plurality of plans of personnel allocation is formulated by carrying out multi-objective optimization so as to optimize the work efficiency (total work time) and the total number of workers.

Note that, the line simulator is virtualized such that the container 30 that has reached the pickup site 18 returns to the mainstream line 12 after a specific work time (for example, four seconds) has elapsed if there is a worker at the pickup site 18. Furthermore, since the inspection phase and the packing phase are high-priority phases, these phases are described as single cells on the line simulator, and the passage time is altered depending on the number of workers allocated to each phase.

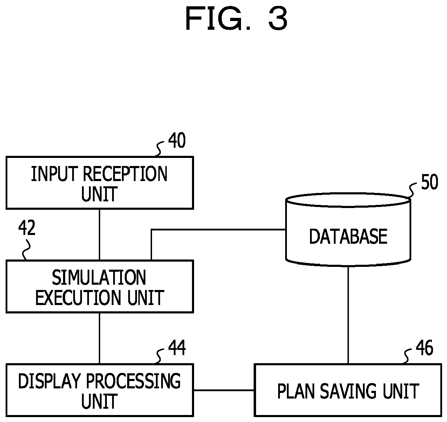

FIG. 2 is a diagram illustrating a hardware configuration of the personnel allocation formulation device 100 of the present embodiment. The personnel allocation formulation device 100 is an information processing device such as a personal computer (PC), and as illustrated in FIG. 2, the personnel allocation formulation device 100 includes a central processing unit (CPU) 190, a read only memory (ROM) 192, a random access memory (RAM) 194, a storage unit (here, hard disk drive (HDD)) 196, a network interface 197, a display unit 193, an input unit 195, a portable storage medium drive 199, and the like. Each component of the personnel allocation formulation device 100 is connected to a bus 198. The display unit 193 includes a liquid crystal display and the like, and the input unit 195 includes a keyboard, a mouse, a touch panel, and the like. In the personnel allocation formulation device 100, the CPU 190 executes a program (including a personnel allocation formulation program) stored in the ROM 192 or the HDD 196 or a program (including the personnel allocation formulation program) read from a portable storage medium 191 by the portable storage medium drive 199 so as to implement the function of each unit illustrated in FIG. 3.

FIG. 3 illustrates a functional block diagram of the personnel allocation formulation device 100. As illustrated in FIG. 3, in the personnel allocation formulation device 100, when the CPU 190 executes the program, the functions as an input reception unit 40 as a reception unit, a simulation execution unit 42 as a calculation unit, a display processing unit 44, and a plan saving unit 46 are implemented.

The input reception unit 40 receives information (for example, the total number of working staff and order information for one day) expected to execute the simulation, which has been input by an administrator or the like via the input unit 195. The information received by the input reception unit 40 is supplied to the simulation execution unit 42.

The simulation execution unit 42 virtualizes a line in the distribution center using the above-described line simulator, and formulates a plan of personnel allocation for the pickup phase, the inspection phase, and the packing phase every predetermined time (for example, 30 minutes).

The display processing unit 44 displays the results of the simulation executed by the simulation execution unit 42 (a plurality of optimal personnel allocations) on the display unit 193. Furthermore, when the administrator or the like approves a plan via the input unit 195 or when the administrator or the like alters a plan and then approves the plan after the alteration, the display unit 193 transmits information on the approved plan to the plan saving unit 46. In addition, for example, the display processing unit 44 displays the approved plan on the display unit 193, or transmits the approved plan to another terminal to display the transmitted plan on the another terminal.

The plan saving unit 46 saves the information on the plan transmitted from the display processing unit 44 in a database 50. Note that, the simulation execution unit 42 executes a simulation regarding a new plan by utilizing the plan saved in the database 50.

(Regarding Processing by Personnel Allocation Formulation Device 100)

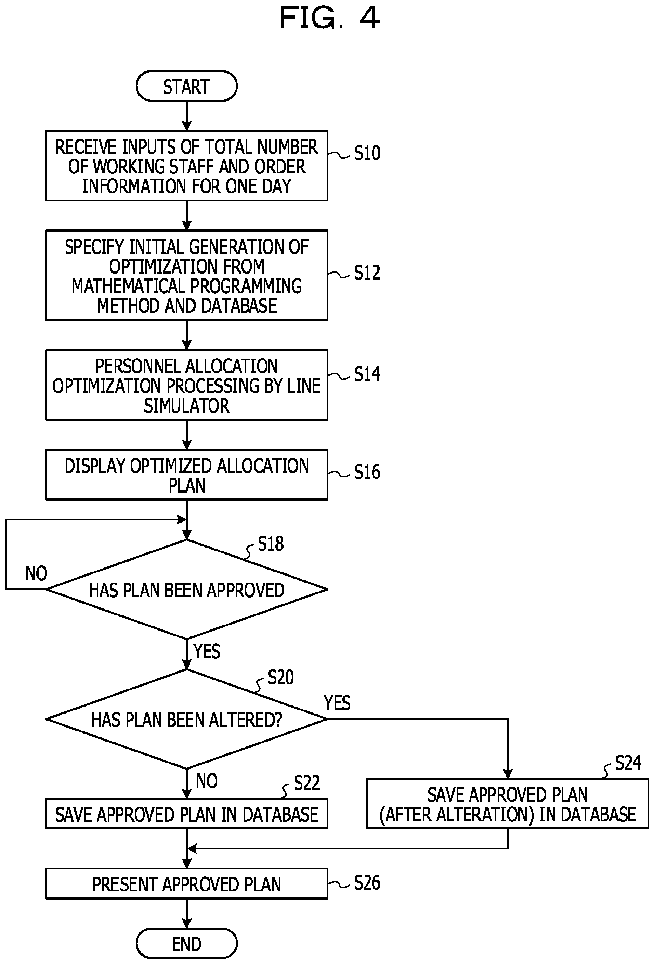

Next, the processing of the personnel allocation formulation device 100 will be described in detail along the flowchart of FIG. 4, with reference to the other drawings as appropriate. Note that, in the processing in FIG. 4, it is assumed that a genetic algorithm is utilized in an optimization calculation for personnel allocation as an example.

The processing in FIG. 4 is, for example, processing that is executed at a timing before starting a task of a day at the distribution center. In the processing in FIG. 4, first, in step S10, the input reception unit 40 receives inputs of simulation conditions (the total number of working staff and the order information for one day) input by the administrator or the like via the input unit 195. Note that, the input reception unit 40 supplies the received simulation conditions to the simulation execution unit 42.

Subsequently, in step S12, the simulation execution unit 42 uses a mathematical programming method and information on a past plan of personnel allocation stored in the database to specify an initial generation in the optimization calculation (calculation using the genetic algorithm). Note that, the description will be given later in regard to using the information on the past plan of personnel allocation when specifying the initial generation.

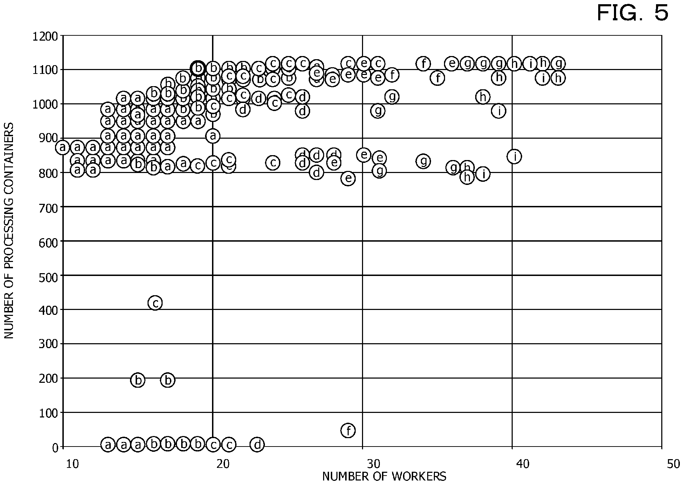

Subsequently, in step S14, the simulation execution unit 42 executes personnel allocation optimization processing by the line simulator based on the simulation conditions. The simulation execution unit 42 first divides the work for one day into several spans of a predetermined time (assumed to be 30 minutes), and searches for an optimum personnel allocation for workers in units of respective divisions (30 minutes) using the line simulator. Here, the total number of workers and the number of processing orders are employed as optimization indices. For example, a personnel allocation plan (how many people to be allocated to which phase) that optimizes the number of orders that can be processed from 10:00 to 10:30 and the number of workers is constructed. Here, the result of multi-objective optimization (Pareto solution) as illustrated in FIG. 5 is obtained. Note that, in FIG. 5, the horizontal axis represents the number of workers (total number), and the vertical axis represents the number of processing containers. The alphabet (lowercase letter) written within a circle indicating each Pareto solution indicates the number of people who perform the packing phase. For example, one of alphabets a, b, c, ..., and i is assigned to the number of people assigned to the packing phase in this sequence from the smallest number of people, in such a manner that an alphabet a means 1 to 4 people, an alphabet i means 28 to 31 people, and so forth. In the present embodiment, the simulation execution unit 42 selects a plurality of Pareto solutions that form a group of optimal solutions, and specifies the selected group as a plurality of plans to be presented. Note that, the simulation execution unit 42 specifies a plurality of plans as plans to be presented, based on a policy defined in advance by the administrator or the like. For example, when the administrator or the like has defined plan presentation policies for a plan that can minimize the number of workers in a given time, a plan that can make the maximum use of a given worker to minimize the work time, an intermediate plan between these plans, and the like, the simulation execution unit 42 selects plans that match these policies from the Pareto solutions in FIG. 5 and specifies the selected plans as plans to be presented. Note that, the plan presentation policies may be defined in units of days, or may be defined by splitting a day into morning and afternoon or every predetermined time. In addition, in the example in FIG. 5, for example, if there is a plan that can process a larger number of orders and lower the number of working staff to minimum, this plan is presented as a plan indicated by a bold circle.

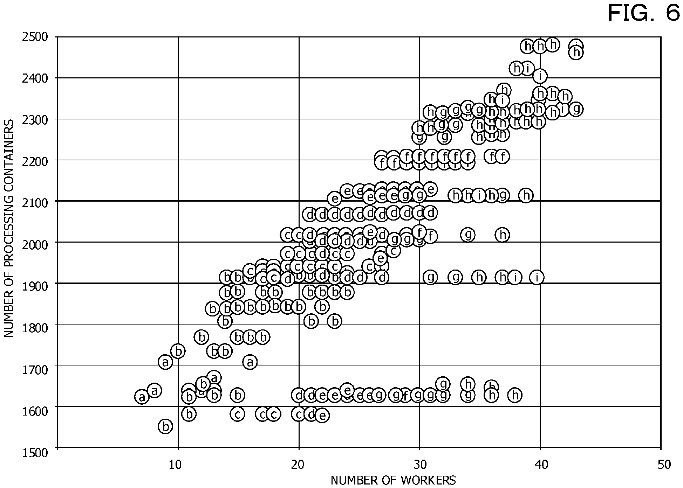

Furthermore, the simulation execution unit 42 fixes plans selected for the time zone from 10:00 to 10:30, and then specifies the personnel allocation plans for the time zone from 10:30 to 11:00 by the multi-objective optimization. At this time, depending on the way of defining policies, there is a case where a plan found for the previous time zone is based on a policy that optimizes the work time, while a plan found for the next time zone is based on a policy that optimizes the total number of workers. Note that, FIG. 6 illustrates an example of the multi-objective optimization result for the time zone from 11:30 to 12:00. In the example in FIG. 6 as well, it is assumed that a plan to be presented is specified according to policies defined by the administrator or the like.

Note that, the simulation execution unit 42 is assumed to replace the order processing sequence with random numbers with respect to the personnel allocation plans found every 30 minutes, and find an order processing sequence that will maximize the work efficiency. In a distribution center such as the one in the present embodiment, the inspection phase or the packing phase is sometimes regarded as a bottleneck phase. In such a case, even if the order processing sequence is altered, the efficiency is hardly raised in some cases. However, if a plan that can achieve optimization even a little can be found, there is a possibility that another personnel allocation plan can be constructed for the following time; for this reason, the present embodiment is designed such that a plan when the order processing sequence is altered can also be constructed.

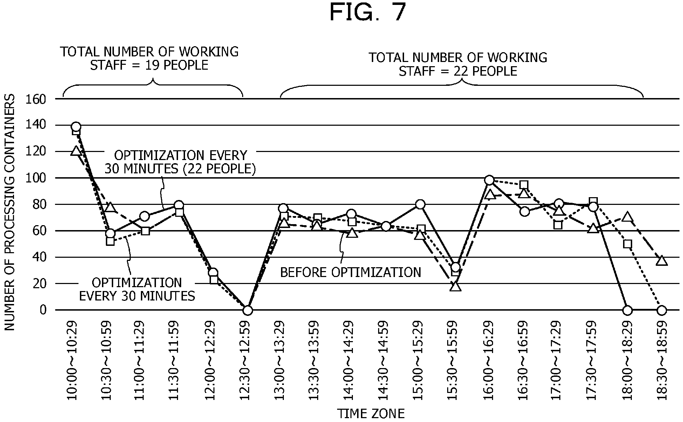

FIG. 7 is a graph illustrating a change in the number of processing containers at a certain work position for each time zone in a case where a plan of personnel allocation is constructed using the present embodiment, as compared to before optimization. In FIG. 7, before optimization (indicated by triangles and the one-dot chain line in FIG. 7), a change in the number of processing containers in a case where all phases are carried out by 22 people (including personnel expected at the slip insertion site) is illustrated. Meanwhile, for optimization every 30 minutes (indicated by squares and the broken line in FIG. 7), a change in the number of processing containers in a case where the personnel allocation is optimized using the present embodiment is illustrated. In addition, for optimization every 30 minutes (22 people), a change in the number of processing containers in a case where only the personnel allocation is altered while the number of workers is kept unchanged (22 people).

It can be seen from FIG. 7 that, by performing optimization every 30 minutes as in the present embodiment, even if the number of working staff in the morning is decreased to 19, the work is completed 30 minutes earlier than before the optimization. Furthermore, it can be seen that, when the personnel allocation is optimized while the number of workers is maintained at 22, the work is completed one hour earlier than before the optimization.

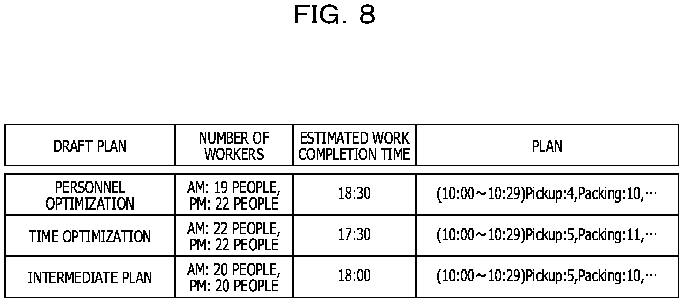

Returning to FIG. 4, in next step S16, the display processing unit 44 displays an optimized allocation plan. In this case, the display processing unit 44 displays, on the display unit 193, a plurality of plans of personnel allocation formulated by the simulation execution unit 42 as described above. Here, as a method of display on the display unit 193, a method of displaying a plurality of plans of personnel allocation in a table format can be adopted, for example, as illustrated in FIG. 8. In the table in FIG. 8, columns of "draft plan", "number of workers", "estimated work completion time", and "plan" are provided. In the "draft plan" column, the name of a policy of plan formulation defined in advance by the administrator or the like is displayed. In the "number of workers" column, the total number of workers deduced in the draft plan in line with each policy (in FIG. 8, the total numbers in the morning and afternoon) is displayed. In the "estimated work completion time" column, the time at which the work is scheduled to be completed in each draft plan is displayed. In the "plan" field, the number of workers to be allocated to each of the pickup phase, the inspection phase, and the packing phase in each time zone is displayed. Note that, the administrator or the like selects one of the rows in FIG. 8 to approve the selected plan.

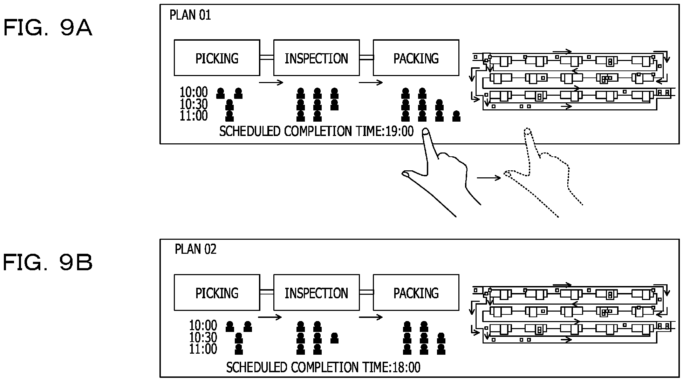

Note that, the display processing unit 44 may perform display as illustrated in FIG. 9A on the display unit 193 instead of the table in FIG. 8. For example, when the display unit 193 is a touch panel, a plan (plan 02) different from "plan 01" can be displayed as illustrated in FIG. 9B by the administrator or the like swiping the touch panel while "plan 01" is being displayed as illustrated in FIG. 9A. Note that, in the examples in FIGs. 9A and 9B, the number of workers to be allocated to each phase in each time zone and the scheduled completion time are displayed. Furthermore, from the display on the right side of the screen in FIGs. 9A and 9B, it is possible to confirm the container flow on the line in the distribution center (whether or not congestion, stagnation, and the like occur).

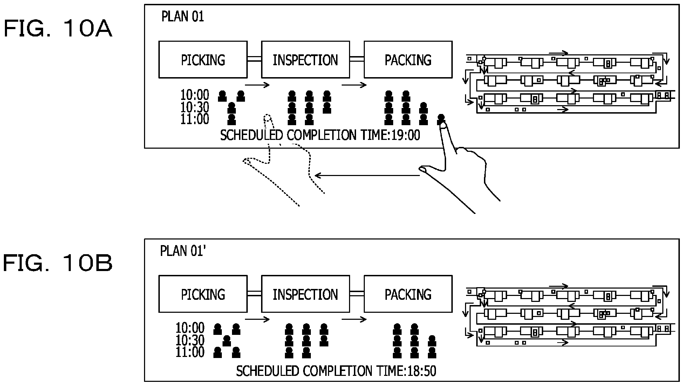

In addition, when the administrator or the like drags (moves) an icon indicating the worker while "plan 01" is being displayed as illustrated in FIG. 10A, the display processing unit 44 displays "plan 01'" in which a part of "plan 01" is altered, as illustrated in FIG. 10B. By employing such a configuration, when a part of the plan is altered by a skilled worker such as an administrator, the plan after the alteration may be displayed immediately. Note that, when a part of the plan is altered, the display processing unit 44 notifies the simulation execution unit 42 to that effect, and causes the simulation execution unit 42 to execute re-computation using the line simulator. Then, the display processing unit 44 accepts information on the scheduled completion time and the container flow on the line in the distribution center obtained by the re-computation of the simulation execution unit 42, and displays the obtained information as illustrated in FIG. 10B. Note that, the administrator or the like can approve the displayed plan by making a predetermined input (for example, touching a predetermined button, and the like) in FIGs. 9A to 10B.

Returning to FIG. 4, in next step S18, the display processing unit 44 waits until a plan is approved. Once the administrator or the like inputs, via the input unit 195, that a plan has been approved, the processing proceeds to step S20. Note that, at the stage of proceeding to step S20, the display processing unit 44 transmits the approved plan to the plan saving unit 46.

When the processing proceeds to step S20, the plan saving unit 46 determines whether or not the approved plan is an altered plan. In a case where the determination in step S20 is negative, the processing proceeds to step S22, and the plan saving unit 46 saves the approved plan in the database 50. On the other hand, in a case where the determination in step S20 is affirmative, the processing proceeds to step S24, and the plan saving unit 46 saves the approved plan (after alteration) in the database 50. After the processing in step S22 or S24 is performed, the processing proceeds to step S26.

When the processing proceeds to step S26, the display processing unit 44 presents the approved plan. For example, the display processing unit 44 displays the approved plan on the display unit 193 or displays the approved plan on another display device (for example, a monitor installed in the vicinity of the line). As described thus far, when the processing up to step S26 is completed, the entire processing in FIG. 4 is completed.

Here, in step S12 described above, the simulation execution unit 42 is assumed to use a plan saved in the database 50 as the initial generation of optimization. For example, when the simulation execution unit 42 performs new optimization processing, by utilizing a plan saved in the database 50, a plan approved by the administrator or the like can be reflected and an appropriate plan may be constructed. Furthermore, the time expected for the optimization calculation may be shortened by starting the calculation from a solution that the administrator or the like considers optimal.

As described above in detail, according to the present embodiment, the input reception unit 40 receives simulation conditions, and the simulation execution unit 42 executes the multi-objective optimization using the line simulator based on the simulation conditions, whereby a plurality of plans of personnel allocation that optimize at least one of the optimization indices (optimization items) including the number of workers and the number of processing orders is found. In this case, the simulation execution unit 42 divides the work time for one day into a plurality of parts and executes the multi-objective optimization in units of respective divided parts. Consequently, in the present embodiment, by finding a plan of personnel allocation every predetermined time (for example, 30 minutes), it may be feasible to lessen the amount of processing and formulate a plan of personnel allocation in a short time. Furthermore, in the present embodiment, it may be feasible to present a plurality of plans of personnel allocation that can achieve cost reductions associated with labor savings and cost reductions associated with shortened work time. Consequently, the administrator or the like can select an appropriate plan from among a plurality of plans of personnel allocation.

In addition, in the present embodiment, the simulation execution unit 42 adjusts the sequence of orders to be processed in accordance with each of a plurality of the found plans of personnel allocation. Consequently, an improvement in the efficiency of processing may be achieved.

Additionally, in the present embodiment, the display processing unit 44 displays the plurality of plans of personnel allocation found by the simulation execution unit 42 on the display unit 193 in a selectable manner (FIGs. 8 to 10B). Consequently, the administrator or the like can select and approve a personnel allocation that the administrator or the like wishes to adopt from among a plurality of plans of personnel allocation.

Furthermore, in the present embodiment, when the display processing unit 44 receives an alteration to a plan of personnel allocation displayed on the display unit 193, the display processing unit 44 displays a plan of personnel allocation after the alteration on the display unit 193 (FIG. 10B). Consequently, the administrator or the like can alter the plan of personnel allocation based on his/her experience or knowledge or the like, and can confirm the plan after the alteration.

In addition, in the present embodiment, the simulation execution unit 42 utilizes the selected plan of personnel allocation when finding a new plan of personnel allocation. Consequently, since new optimization processing is performed based on a plan of personnel allocation selected actually in the past by the administrator or the like, a more appropriate plan reflecting the plan approved by the administrator or the like may be constructed. Besides, the time expected for the optimization calculation may be shortened by starting the optimization processing from a solution that the administrator or the like considers optimal.

Note that, in the above embodiment, a case where the total number of workers and the number of processing orders are used as optimization indices (optimization items) in the optimization calculation has been described; however, the embodiment is not limited to this case. For example, instead of or together with the total number of workers and the number of processing orders, the total movement distance of the workers may be used as an optimization index. As mentioned above, by using the total movement distance of the workers as an optimization index, it may be feasible to formulate and present a plan of personnel allocation that can shorten the movement distance of the workers. Note that, an index other than the above can also be used as an optimization index.

In addition, in the above embodiment, a case where the work for one day is divided every 30 minutes and a plan of personnel allocation is formulated in units of respective divisions has been described; however, the embodiment is not limited to this case. For example, according to the request from the site, the work for one day may be divided every time span shorter than 30 minutes or longer than 30 minutes. Alternatively, the number of orders may be divided into a plurality of parts, and a plan of personnel allocation may be formulated for each of the divided parts of orders.

Note that, in the above embodiment, a case where the display in FIG. 9B is performed when the screen on which the display in FIG. 9A is performed is swipe has been described; however, the embodiment is not limited to this case, and the displays in FIGs. 9A and 9B may be performed simultaneously on the screen. Consequently, a plurality of plans may be compared easily.

Note that, the processing functions described above can be implemented by a computer. In that case, a program is provided that describes a processing content of a function that the processing device is supposed to have. The program is executed on the computer, whereby the above processing function is implemented on the computer. The program in which the processing content is written can be recorded in a computer-readable recording medium (except for a carrier wave).

In a case of distributing the program, for example, the program is sold in the form of a portable recording medium such as a digital versatile disc (DVD) or a compact disc read only memory (CD-ROM) in which the program is recorded. Alternatively, it is possible to store the program in a storage device of a server computer and transfer the program from the server computer to another computer via a network.

The computer which executes the program stores, for example, the program recorded in the portable recording medium or the program transferred from the server computer in a storage device of the computer. Then, the computer reads the program from the storage device of the computer and executes processing according to the program. Note that, the computer can also read the program directly from the portable recording medium and execute processing according to the program. Furthermore, the computer also can sequentially execute processing according to the received program each time when the program is transferred from the server computer.

The embodiment described above is a preferred example of carrying out the present embodiment. However, the present embodiment is not limited to this, and a variety of modifications can be made without departing from the scope of the present embodiment.

### REFERENCE SIGNS LIST

- 40: Input reception unit (reception unit)
- 42: Simulation execution unit (calculation unit)
- 44: Display processing unit
- 100: Personnel allocation formulation device

## Claims

1. A personnel allocation formulation device that formulates an allocation plan for workers for each phase in a distribution center in which a phase of picking up products to be delivered based on orders, a phase of inspecting the picked-up products, and a phase of packing the inspected products are executed by workers, the personnel allocation formulation device comprising:
a reception unit that receives a simulation condition; and
a calculation unit that executes multi-objective optimization using a line simulator based on the simulation condition to find a plurality of allocation plans for workers that optimize at least one of optimization items including a number of the workers and a number of the orders that are processable, wherein
the calculation unit divides a work time for one day or orders to be processed in one day at the distribution center into a plurality of parts and executes the multi-objective optimization in units of respective divided parts.

2. The personnel allocation formulation device according to claim 1,
wherein the calculation unit adjusts a sequence of orders to be processed, in accordance with each of a plurality of the allocation plans that have been found.

3. The personnel allocation formulation device according to claim 1 or 2, wherein the optimization items include a movement distance of the workers.

4. The personnel allocation formulation device according to any one of claims 1 to 3,
further comprising a display processing unit that displays a plurality of the allocation plans found by the calculation unit, in a selectable manner.

5. The personnel allocation formulation device according to claim 4,
wherein, when an alteration to one of the displayed allocation plans is received, the display processing unit displays an allocation plan after the alteration.

6. The personnel allocation formulation device according to claim 5,
wherein, in a case where one of the allocation plans is selected, the calculation unit utilizes the selected one of the allocation plans for multi-objective optimization when finding a new allocation plan.

7. A personnel allocation formulation method that formulates an allocation plan for workers for each phase in a distribution center in which a phase of picking up products to be delivered based on orders, a phase of inspecting the picked-up products, and a phase of packing the inspected products are executed by workers, the personnel allocation formulation method comprising:
receiving, by a computer, a simulation condition; and
executing, by the computer, multi-objective optimization using a line simulator based on the simulation condition to find a plurality of allocation plans for workers that optimize at least one of optimization items including a number of the workers and a number of the orders that are processable, wherein
in the calculating, a work time for one day or orders to be processed in one day at the distribution center are divided into a plurality of parts and the multi-objective optimization is executed in units of respective divided parts.

8. The personnel allocation formulation method according to claim 7,
wherein, in the calculating, a sequence of orders to be processed is adjusted in accordance with each of a plurality of the allocation plans that have been found.

9. The personnel allocation formulation method according to claim 7 or 8,
wherein the optimization items include a movement distance of the workers.

10. The personnel allocation formulation method according to any one of claims 7 to 9, wherein the computer further executes displaying a plurality of the allocation plans found in the calculating, in a selectable manner.

11. The personnel allocation formulation method according to claim 10,
wherein, in the displaying, when an alteration to one of the displayed allocation plans is received, an allocation plan after the alteration is displayed.

12. The personnel allocation formulation method according to claim 11, wherein, in a case where one of the allocation plans is selected,
in the calculating, the selected one of the allocation plans is utilized for multi-objective optimization when a new allocation plan is found.

13. A computer-readable recording medium having stored therein a personnel allocation formulation program that formulates an allocation plan for workers for each phase in a distribution center in which a phase of picking up products to be delivered based on orders, a phase of inspecting the picked-up products, and a phase of packing the inspected products are executed by workers, the personnel allocation formulation program causing a computer to execute a process comprising:
receiving a simulation condition; and
executing multi-objective optimization using a line simulator based on the simulation condition to find a plurality of allocation plans for workers that optimize at least one of optimization items including a number of the workers and a number of the orders that are processable, wherein
in the calculating, a work time for one day or orders to be processed in one day at the distribution center are divided into a plurality of parts and the multi-objective optimization is executed in units of respective divided parts.
